Europäisches Patentamt

(19) European Patent Office    (11) Publication number:    **0 040 538**

Office européen des brevets    **A1**

(12)    **EUROPEAN PATENT APPLICATION**

(21) Application number: **81302202.7**    (51) Int. Cl.³: **F 16 L 55/10**

(22) Date of filing: **18.05.81**

(30) Priority: **19.05.80 US 150840**

(43) Date of publication of application:
**25.11.81 Bulletin 81/47**

(84) Designated Contracting States:
**AT BE CH DE FR IT LI NL SE**

(71) Applicant: **RAYCHEM CORPORATION**
**300 Constitution Drive**
**Menlo Park California 94025(US)**

(72) Inventor: **Holmes, James Crawford**
**601 Connecticut Street**
**San Francisco California 94107(US)**

(74) Representative: **Jones, David Colin et al,**
**RAYCHEM LIMITED Morley House 26 Holborn Viaduct**
**London E.C.1.(GB)**

(54) Recoverable plug for sealing a pipeline.

(57) A plug for sealing abandoned pipelines comprises a closure member (1) that is acted upon by a biasing means such as a spring (10) contained within the closure member (1). The biasing means (10) acts on the closure member (1) in such a way that when the plug is inserted within the pipeline the closure member (1) is caused to change in dimension and close the pipeline. The closure member (1) is preferably made from a recoverable material adapted such that recovery also acts to cause the member (1) to change in dimension to close the pipeline. The closure member (1) is coated with an adhesive (15) which contacts the inner pipeline wall to form a good seal.

FIG__4

EP 0 040 538 A1

## DESCRIPTION

Recoverable Plug For Sealing A Pipeline.

This invention relates to the permanent termination of fluid flow in pipelines by sealing the pipeline internally, and more particularly to an internal plug for effecting said sealing.

Permanent abandonment of inactive utility pipeline services traditionally necessitates a costly street excavation. This is not only expensive but also presents a traffic nuisance to the public. Furthermore inactive pipelines present a wasteful leak potential, and in the case of utility gas pipelines, a potentially explosive leak hazard.

Permanent abandonment of inactive pipelines is generally effected by inserting a plug within or at the head of the pipeline to be abandoned to seal off that pipeline. A known method of permanently abandoning a branch pipeline, for example, comprises positioning an umbrella shaped array of copper leaves inside the main pipeline adjacent the branch pipeline and filling it with epoxy material. Such a plug however has the disadvantage that epoxy materials are difficult to work with, and deteriorate with age. Furthermore the umbrella shaped plug obstructs the main pipeline and may become dislodged by, for example, cleaning of the main pipeline.

It is an object of the present invention to provide a plug for internally closing a pipeline that minimises or at least substantially alleviates the disadvantages of known plugs for closing inactive pipelines, it is also an object of the present invention to provide an inexpensive method of sealing an inactive pipeline.

One aspect of the present invention provides a recoverable plug for sealing a pipeline, the plug comprising a closure member that is arranged to change in dimension so as to close the pipeline transversely, biasing means for effecting at least part of said change in dimension, and sealing means arranged, on said change in dimensions, to seal the closure member to the pipeline.

It is to be understood that in this context a change in dimension includes a change in one or more of the features of shape, configuration and size.

A second aspect of the present invention provides a method for sealing a pipeline with a plug, comprising inserting into the pipeline, a recoverable plug having a closure member that is arranged to change in dimension so as to close the pipeline transversely, the plug further having biasing means for effecting at least part of said change in dimension, and sealing means arranged, on said change in dimension, to seal the closure member to the pipeline, the method further comprising effecting recovery of the plug so that the closure member thereof changes in dimension so as to close the pipeline, thereby bringing said sealing means into contact with the inner surface of the pipeline to effect a seal.

In a preferred embodiment the closure member and biasing means are made from a heat-recoverable material.

Heat-recoverable materials are those which are said to have a memory. This memory or more particularly, this preprogrammed heat stable shape, can be due to a characteristic known as elastic memory in the case of polymeric materials or to a crystallographic phase transformation in the case of certain alloys.

Heat-recoverable articles may be produced by deforming
a dimensionally heat stable configuration to a dimensionally
heat unstable configuration, in which case the article will
assume, or tend to assume, the original heat stable configuration
on the application of heat alone.

According to one method of producing a heat-recoverable
article, a polymeric material is first extruded or moulded
into a desired shape. The polymeric material is then cross-
linked or given the properties of a cross-linked material by
exposure to high energy radiation for example a high energy
electron beam or gamma radiation. The cross-linked polymeric
material is heated and deformed, and then locked in the
deformed condition by quenching or other suitable cooling
means. The deformed material will retain its shape almost
indefinitely until exposed to a temperature above its
crystalline melting temperature, for example about $120^{o}C$
in the case of polyethylene. Examples of heat-recoverable
articles may be found in US Patent Specification No. 2,027,962
and in UK Patent Specification No. 990,235. the disclosures
of which are incorporated herein by reference. As is made
clear in US Patent No. 2,027,962, however, the original
dimensionally stable heat-stable configuration may be a
transient form in a continuous process in which, for example
an extruded tube is expanded, whilst hot, to dimensionally
heat unstable form.

According to another method of producing a heat-recoverable
article for the case where the article comprises a metal
rather than a polymeric material, the article is fabricated
by first casting, rolling or stamping, for example, and/or
otherwise forming the material into the heat stable configuration.
The article is then deformed at ambient or below its transformation
temperature into a different shape. This second shape is
maintained indefinitely until heated to a memory transition
temperature characteristic of the particular alloy composition, at which temperature the article recovers to or towards its heat stable configuration.

In preferred embodiments of the present invention the closure member comprises a recoverable polymeric or metalic material, and the biasing means comprises a recoverable metalic material. Suitable recoverable materials may be chosen that do not deteriorate over the lifetime of the plug, deterioration of the material of the plugs being one of the disadvantages of plugs known in the art.

Two embodiments of recoverable plug each in accordance with the present invention will now be described, by way of example, with reference to the accompanying drawings, wherein:

Fig. 1 is a cross-sectional view of a closure member of the first embodiment of plug the closure member having been cross-linked to a heat stable shape;

Fig. 2 is a cross-sectional view of the closure member of Fig.1 after it has been deformed to a reduced diameter;

Fig. 3 is a cross-sectional view of the first embodiment of plug showing the closure member of Fig.2 after it has been coated with adhesive and loaded with a spring which has also been formed to a heat stable shape, then deformed to a reduced diameter;

Fig. 4 is a cross-sectional view of the plug of Fig.3 after the wall of the closure member has been folded inward to form a retaining flap for a cartridge heater assembly;

Fig. 5 is a cross-sectional cutaway view of the plug of Fig.4 after it has been inserted into the pipeline and the closure member and spring recovered;

Fig. 6 is a front view of a diaphragm shaped closure member of the second embodiment of plug;

Fig. 7 is a side view of the diaphragm of Fig.6 after the integrally inserted heat-recoverable spring has been deformed into a reduced diameter configuration and connected to an insertion tool; and

Fig. 8 is a cross-sectional view of the plug after it has been inserted into the pipeline and the spring recovered.

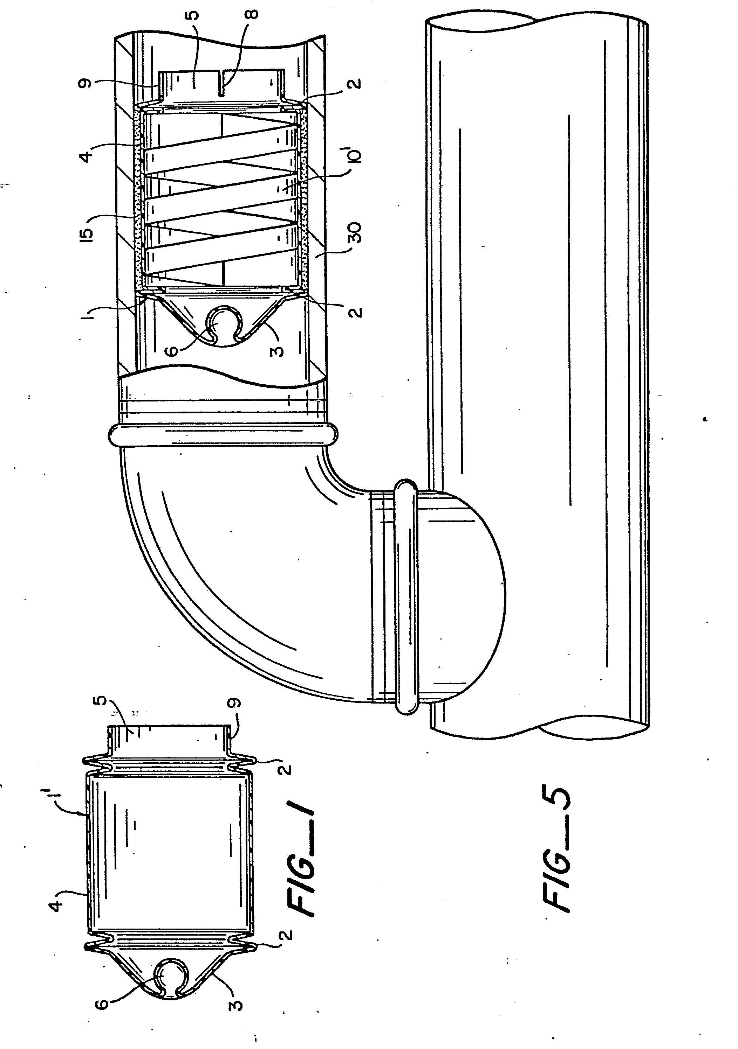

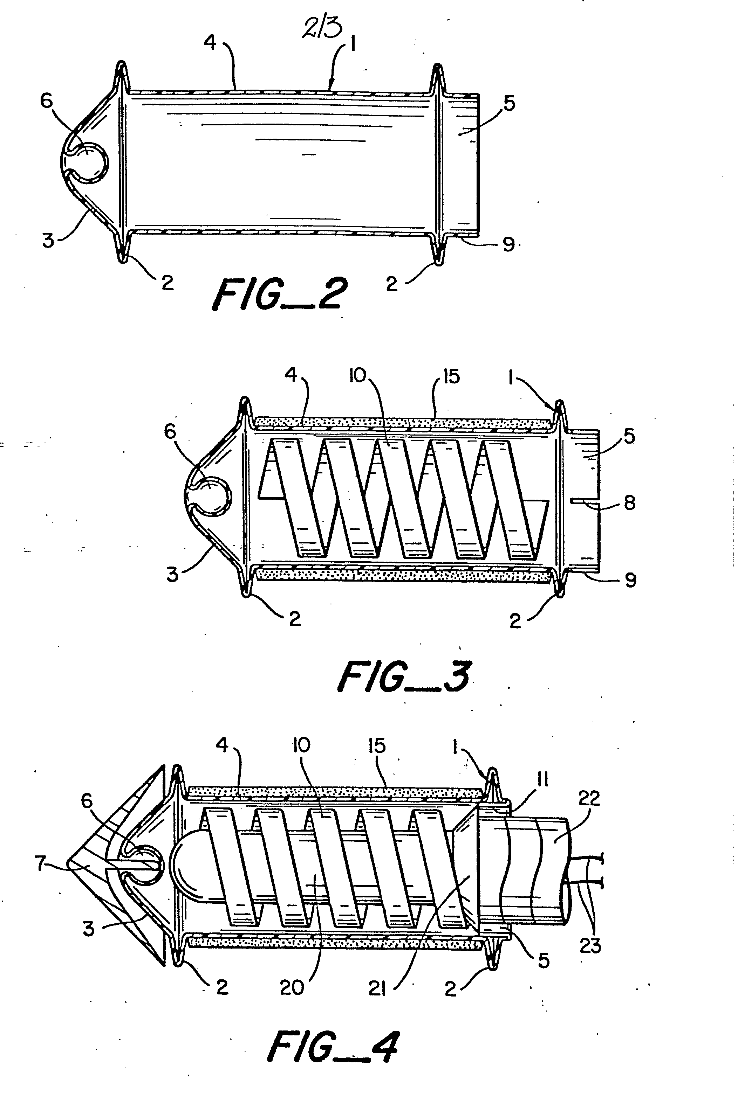

Referring to Figs.1 to 5, a first embodiment of the heat-recoverable pipeline termination plug of the present invention comprises a closure member 1, a biasing means which is a spring 10, and a sealing means which is an adhesive coating 15. The closure member 1 is a hollow cylindrical moulded structure fabricated from a polymeric material, such as polyethylene, which exhibits heat-recoverable behaviour. Fig.1 shows the closure member after cross-linking to a heat stable shape 1', by means of chemical cross-linking agents such as peroxides or by means of ionizing radiation, and Fig.2 shows a closure member 1 formed by deforming the closure member 1' of Fig.1 to a reduced diameter at an elevated temperature.

Referring now to Figs.3 to 5 in particular, the spring 10, is fabricated from a memory metallic alloy material, such as a copper based alloy as described in US. Patent Nos. 3,783,037 and 802,930. A rolled and stamped cut sheet is formed to impart a stable spring shape 10'. The spring is shown in this embodiment as a spiral spring, but it will be appreciated that many alternative spring configurations could be used. Fig.3 shows the spring 10 after it has been deformed at ambient temperatures to a reduced diameter and inserted into the closure member 1. The closure member has a closed end 3 which leads the insertion advance of the plug into the pipeline cylindrical walls 4 and an open tail-end 5 adapted to receive an insertion tool. The closed end 3 defines a cavity which is a guide means receptical 6 for facilitating connection of a spring-loaded umbrella like means 7 (shown in Fig.4) which may optionally be included and act as a guide means. The spring-loaded umbrella like means 7 can be press-fitted or glued into the guide means receptical 6 and functions to centre the plug, guiding it past minor pipeline obstructions during insertion.

The closure member 1 shown in Fig.3 also has a sealing collar 2 extending radially outward from the closure member or more preferably a pair of sealing collars 2 as shown. The sealing collars 2 serve multiple functions. They retain or seal-in the adhesive during heat-recovery towards the heat stable plug shape, a distinct advantage if the adhesive coating 15 is of the hot-melt type which might tend to flow. They also serve a guidance function helping to centre the plug during insertion and a protective function, helping to reduce abrasion of the adhesive coating 15 by the pipeline inner wall surface during insertion. The sealing collar 2 located near open tail-end 5 also functions as a rip stip, as explained below.

An end portion 9 of the open tail-end 5 is formed into a retainer flap 11 by inwardly folding the cylindrical walls. The folding operation can be facilitated by a plurality of cuts 8. Hence the need for the sealing collar 2 located near open tail-end 5 to function as a rip stop, that is, as a barrier against unwanted tearing. Retainer flap 11 serves to retain an electrical heating element, such as a cartridge heater 20 having a seat 21 (shown in Fig.4). The heater 20 is pressed into the closure member 1 through the open tail-end 5 and through the spring 10 and is retained by retainer flap 11 by means of the larger diameter of seat 21 which catches on the retainer flap 11 which has a slightly smaller diameter, thereby preventing premature removal of the cartridge heater 20. The spring 10 functions to position the heater 20 so as to distribute heat more evently thereby preventing localized overheating of the polymeric closure member 1.

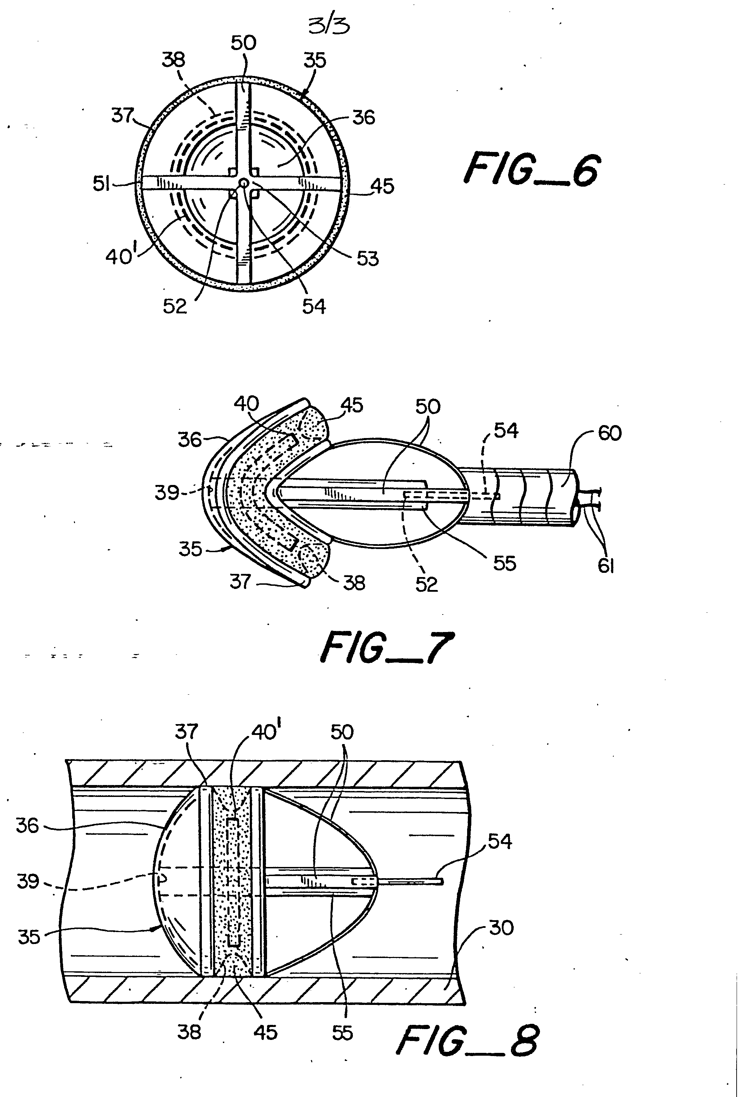

The cartridge heater 20 is attached to a flexible insertion means, such as a snake 22. Electrical leads 23 for the cartridge heater 20 are threaded through the snake 22. After insertion to the desired position, power is supplied to the cartridge heater 20 which heats the plug assembly and accomplishes heat-recovery of the spring 10 and of the closure member 1 to their heat stable shapes 1' and 10' (as shown in Fig.5). It can be seen that the recovery of the spring 10 and closure member 1 result in the closure member 1 changing in dimension so as to close the pipeline 30.

When heat-recovery is complete, the end portion 9 of the tail-end 5 which formed the retainer flap 11 will have returned to its heat stable shape. The cartridge heater 20 will then slip easily from the closure member 1 a convenient indicator of when the heat-recovery step is complete. The power is turned off and the cartridge heater 20 and snake 22 are removed.

An example of a type of adhesive suitable for the adhesive coating 15 is a hot-melt adhesive whose melting point corresponds roughly to the recovery temperatures of the heat-recoverable elements. Many mastics and other types of adhesives may also be used. As the heat-recovery step progresses, the force of the expanding closure member 1 and the force of the expanding spring 10 combine to press the adhesive coating 15 into intimate contact with the inner walls of the pipeline 30 effecting a bonded seal therebetween.

A lubricant coating (not shown) for the spring 10 may optionally be included for facilitating sliding of the spring 10 against the closure member 1 when the plug is heated to its memory transition temperature. Suitable lubricants include glycerine and silicone oils, for example.

It will be appreciated that other embodiments of plug
for sealing the pipeline may also be used, for example a
plug in which the closure member is heat-recoverable and
fabricated from a shape memory alloy heat-recoverable spring
of, for example, beta-brass, or with an ordinary spring of,
for example beryllium-copper. Moreover, although the closure
member needs to be  able to change in dimension so as to
close the pipe, it need not be fabricated of a heat-recoverable
material. It could be, for example, a cylindrical folded
bellows, or a diaphragm which can be compressed.

A second embodiment of a plug according to the present
invention that uses a diaphragm as a closure member is shown
in Figs.6 to 8. Referring to Figs.6 to 8, the diaphragm
closure member 35 has a thicker outer portion 36 in doughnut
fashion. It is fabricated from a polymeric material such as
polyethylene. The outer portion 36 has a circular spring 40'
biasing means integrally inserted therein. The spring 40' is
made of a heat-recoverable alloy such as beta-brass which is
formed into the shape of a circular spring before insertion
into the housing's outer portion 36.

The outer edge 37 of the outer portion 36 of the
diaphragm 35 defines a trough 38. This trough 38 contains a
sealing means which is preferably an adhesive 45, especially
a hot-melt adhesive. The adhesive 45 is deposited into the
trough 38 as a bead.

An array of crossed guides 50 is attached at the
uncrossed ends 51 of the guides 50 to the diaphragm's outer
portion, 36. The cross guides 50 have a hole 52 through the
centre of their crossed area 53. The cross guides serve to
stabilize the plug when it is compressed into the configuration
shown in Fig.7 ready for insertion into the pipeline, and to
facilitate handling and mounting to insertion tooling 60.

A guide pin 54 is slidably threaded through the hole 52 in the centre of the crossed area 53 of the crossed guides 50. The far end of the guide pin 54 is attached to a spacer 55. The guide pin 54 may define a notch (not shown) to act as a cocking mechanism when the plug is ready for insertion (as shown in the configuration in Fig.7).

The spacer 55 rests on the inner wall of the centre portion 39 of the diaphragm closure member 35. The other end of spacer 55 has guide pin 54 attached thereto. The spacer 55 provides a stabilizing function.

Referring to Fig.7 showing the plug ready for insertion in the pipeline, the circular spring 40' of Fig.6 has been deformed to a second shape for a heat-recoverable spring 40, also compressing the diaphragm 35. This second shape is retained until the spring 40 is heated to its memory transition temperature. Heat can suitably be applied via electric current. Electrical leads 61 are threaded through the insertion tooling 60 which is preferably a flexible snake. The heater can alternatively be a cartridge heater or other heating element.

Referring now to Fig.8, the plug is shown in its final position in the pipeline 30 after insertion by means of insertion tooling 60 after heating to the memory transition temperature for the heat-recoverable spring 40, and after removal of the insertion tooling 60. The spring 40 has returned to its heat stable shape as circular spring 40', causing the diaphragm closure member 35 to change configuration to close transversely the pipeline 30. The heating operation also serves to activate or melt the adhesive 45 if it is a hot-melt adhesive. The force of heat-recovery of spring urges the adhesive 45 into intimate contact with the inner wall of pipeline 30 thereby effecting a permanently bonded seal.

An advantage of the present invention as depicted by both the specific embodiments described, is that the plug may be internally placed within the pipeline eliminating the need for costly street excavation. Also the plug is a very convenient means of terminating branch pipelines without intruding into and blocking the main pipeline.

CLAIMS

1.   A recoverable plug for sealing a pipeline, the plug
comprising a closure member that is arranged to change in
dimension so as to close the pipeline transversely, biasing
means for effecting at least part of said change in dimension,
and  sealing means arranged, on said change in dimension, to
seal the closure member to the pipeline.

2.   A plug according to Claim 1, wherein the closure
member is substantially cylindrically shaped, having a
closed end.

3.   A plug according to Claim 2, wherein the end of the
closure member that is remote from said closed end has a
retainer flap formed by inwardly folding the cylindrical
wall.

4.   A plug according to Claim 1, wherein said closure
member comprises a diaphragm having a trough containing
adhesive at its outer edge, the biasing means being
positioned in the outer portion of the diaphragm, and
integrally formed therewith.

5.   A plug according to any preceding claim, wherein said
change in dimension of the closure member is at least partly
effected by expansion of the closure member transversely.

6.   A recoverable plug according to any preceding claim,
wherein the biasing means is contained within the closure
member.

7.   A plug according to any preceding claim, wherein said
closure member is made from a heat-recoverable polymeric or
metallic material that is recoverable towards the inner
surface of the pipeline.

8.　A plug according to any preceding claim, wherein the biasing means is made from a heat-recoverable metallic material and is of generally spiral configuration which expands so as to urge said closure member towards the inner surface of the pipeline.

9.　A plug according to any preceding claim, wherein said biasing means and closure member are heat-recoverable and wherein said biasing means is coated with a lubricant for facilitating sliding of said biasing means against the closure member when the plug in heated to the recovery temperature of the biasing means and of the closure member.

10.　A plug according to any preceding claim, wherein said closure member has a receptacle for receiving guide means for guiding the plug into the pipeline.

11.　A plug according to any preceding claim, which comprises a guide means attached to said closure member.

12.　A plug according to Claim 11, wherein said guide means comprises a spring-loaded umbrella-like means for positioning said closure member and for facilitating insertion thereof.

13.　A plug according to Claim 4, or any claim dependent thereon, the plug having guide means for guiding the plug into the pipeline, the guide means comprising an array of crossed guides, a guide pin and a spacer, said spacer resting against the centre of the diaphragm with said guide pin extending outwardly therefrom, said crossed guides being attached at their uncrossed ends to the outer portion of the diaphragm and crossed guides defining a hole in the centre of the crossed area with the guide means slidably running therethrough.

14. A plug according to any preceding claim, wherein the sealing means comprises a hot-melt adhesive.

15. A method for sealing a pipeline with a plug, comprising inserting into the pipeline, a recoverable plug having a closure member that is arranged to change in dimension so as to close the pipeline transversely, the plug further having biasing means for effecting at least part of said change in dimension, and sealing means arranged, on said change in dimension, to seal the closure member to the pipeline, the method further comprising effecting recovery of the plug so that the closure member thereof changes in dimension so as to close the pipeline, thereby bringing said sealing means into contact with the inner surface of the pipeline to effect a seal.

FIG__1

FIG__5

0040538

*FIG_2*

*FIG_3*

*FIG_4*

FIG_6

FIG_7

FIG_8

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE - A1 - 2 440 086 (MAIN-GASWERKE AG)<br><br>+ Totality +<br><br>-- | 1,2,5, 14,15 | F 16 L 55/10 |
| | FR - A1 - 2 335 786 (THE BABCOCK & WILCOX COMPANY)<br><br>+ Totality +<br>& US-A-4 044 798<br><br>-- | 1,2,5, 15 | |
| | FR - A - 1 224 256 (GAZ DE FRANCE)<br><br>+ Totality +<br><br>---- | 1,2,5, 15 | **TECHNICAL FIELDS SEARCHED (Int. Cl.³)**<br><br>F 16 L 55/00<br>F 16 L 58/00<br>B 08 B 9/00 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| VIENNA | 22-07-1981 | SCHUGANICH |

EPO Form 1503.1  06.78